# FASCICULE DE BREVET EUROPEEN

(11) **EP 2 464 134 B1**
(45) Date de publication et mention de la délivrance du brevet: **29.07.2015**
(21) Numéro de dépôt: 11193048.3
(22) Date de dépôt: 12.12.2011
(51) Int. Cl.: H04N 21/418

(54) **Inscription de droit avec activation locale**
Rechtmäßige Eintragung mit lokaler Aktivierung
Entitlement with local activation

(30) Priorité: 13.12.2010 FR 1060443
(43) Date de publication de la demande: 13.06.2012
(73) Titulaire: Orange, 75015 Paris (FR)
(72) Inventeur: Guionnet, Chantal, 35510 CESSON-SEVIGNE (FR); Fontaine, Noel, 35590 SAINT-GILLES (FR)
(74) Mandataire: Cabinet Plasseraud

(56) Documents cités:
- EP-A1- 1 968 316
- "FUNCTIONAL MODEL OF A CONDITIONAL ACCESS SYSTEM", EBU REVIEW- TECHNICAL, EUROPEAN BROADCASTING UNION. BRUSSELS, BE, no. 266, 21 décembre 1995 (1995-12-21), pages 64-77, XP000559450, ISSN: 0251-0936

## Description

La présente invention concerne l'accès et la gestion d'accès à un contenu numérique sous forme protégée auprès d'un terminal numérique, tel qu'un terminal de type « Set Top Box » ou « connected TV » (poste téléviseur comportant des moyens de traitement de contenus protégés et disposant d'une interface permettant de le connecter à un réseau internet IP).

Les systèmes de contrôle d'accès à de tels contenus fonctionnent habituellement avec des messages de type ECM (pour «Entitlement Control Message») et EMM (pour « Entitlement Management Message ») qui sont décrits dans la norme UTE-C 90.007.

Les messages de contrôle d'accès de type ECM véhiculent généralement un mot de contrôle CW (pour « Control Word » en anglais) sous forme chiffrée permettant de désembrouiller le contenu numérique protégé, et définissent des critères d'accès au contenu numérique. Les messages de droit de type EMM contiennent quant à eux des données de droit d'accès au contenu numérique. L'accès au contenu protégé est conditionné par une compatibilité entre les critères d'accès définis dans les messages de contrôle ECM et les données de droit des messages de droit EMM. En effet, une telle compatibilité permet le déchiffrement du mot de contrôle CW qui peut alors être utilisé pour le désembrouillage du contenu numérique. Le contenu numérique est transmis au terminal sous forme d'un flux de données de contenu chiffrées, en mode broadcasté ou télédiffusé, avec les messages de contrôle d'accès ECM associés.

Un processeur de sécurité (tel que typiquement une carte à puce) est adapté:
- pour stocker des données de droit d'accès contenues dans les messages de droit EMM,
- pour vérifier une compatibilité entre ces données de droit d'accès et les critères d'accès au contenu numérique, les critères précités étant reçus dans les messages de contrôle d'accès ECM et
- pour déchiffrer des mots de contrôle CW présents sous forme chiffrée dans les messages de contrôle d'accès ECM.

Les messages de droit EMM sont transmis au terminal. Ces messages de droit EMM contiennent des données de droit qui comprennent des droits de type abonnement, réservation/achat de contenu, et des clés d'exploitation destinées à être utilisées pour le traitement des messages ECM. Habituellement, les données de droit contenues dans les messages de droit EMM sont renouvelées de manière répétée. Les messages de droit EMM peuvent par exemple être transmis cycliquement, avec des cycles plus ou moins longs dont la durée peut dépendre à la fois du débit alloué pour leur transmission et du nombre d'abonnés ciblés. Cependant dans le cas d'un abonnement à un bouquet satellite comprenant un grand nombre d'abonnés et allouant à la transmission des messages de droit EMM une faible partie du débit, la durée d'un cycle peut être longue. Les données de droit sont en effet envoyées de façon individuelle à chaque abonné pour des raisons de sécurité ce qui nécessite donc l'envoi d'autant de messages de droit EMM que d'abonnés à atteindre. Ces renouvellements permettent d'assurer les offres commerciales caractérisant l'accès au service (abonnement, « pay per view », etc.)

A la réception des messages de droit EMM, le terminal transmet ces messages au processeur de sécurité. Les données de droit contenues dans les messages de droit EMM sont alors stockées dans une mémoire du processeur de sécurité.

A la réception d'un contenu protégé, le terminal reçoit également des messages de contrôle d'accès ECM associés au contenu et les transmet au processeur de sécurité. Les critères d'accès présents dans les messages de contrôle ECM sont traités par le processeur de sécurité. Dans le cas où les données de droit stockées dans la mémoire du processeur de sécurité ne sont pas compatibles avec les critères d'accès présents dans les messages de contrôle ECM, le processeur de sécurité remonte un statut d'accès non autorisé à un module logiciel en charge du traitement de l'accès conditionnel au contenu numérique.

Dans le cas où les données de droit stockées dans la mémoire du processeur de sécurité sont compatibles avec les critères d'accès définis dans les messages de contrôle ECM, le processeur de sécurité déchiffre au moyen d'une clé d'exploitation reçue au préalable dans un message EMM le mot de contrôle CW défini dans le message de contrôle ECM et transmet le mot de contrôle déchiffré au terminal.

Le terminal peut alors désembrouiller le contenu numérique protégé au moyen du mot de contrôle CW déchiffré par le processeur de sécurité. Le terminal peut ensuite transmettre le contenu numérique désembrouillé à un dispositif d'affichage en vue de l'affichage du contenu pour une visualisation par un utilisateur.

Ainsi, dans un mode unidirectionnel de diffusion, tel qu'un mode broadcasté ou télédiffusé, le terminal ne peut pas communiquer de manière bidirectionnelle et individuelle avec un serveur en vue de requérir des données de droit compatibles avec les critères d'accès au contenu numérique protégé.

En effet, des messages de droits EMM sont émis par un opérateur, le plus souvent de manière cyclique, vers les terminaux des utilisateurs. La durée d'un cycle peut être relativement longue et implique qu'un utilisateur souhaitant acquérir une donnée de droit pour l'accès à un événement par exemple, doive formuler une demande à l'avance, afin que cette donnée de droit soit effectivement reçue lors de l'émission d'un prochain cycle de messages de droit EMM. Ainsi, pour obtenir des données de droit, l'utilisateur doit faire une demande préalable d'acquisition de données de droit mises en vente par un opérateur par exemple, en modifiant un abonnement ou en se connectant à un portail.

Par ailleurs, le traitement des demandes requiert des conversions de protocoles, une génération des données de droit et un envoi des données de droit, ce qui introduit des délais supplémentaires entre la demande de données de droit par l'utilisateur et leur réception effective.

Les délais introduits impliquent un arrêt de la mise en vente de tels événements un certain temps avant la diffusion de cet événement. Par conséquent, pour accéder à de tels contenus, un utilisateur doit faire une demande préalable qui dépend d'une fréquence de transmission des messages de droit EMM, des délais de traitement des demandes et du nombre de demandes reçues par un opérateur.

La présente invention vient améliorer la situation.

Elle propose à cet effet un procédé d'activation locale d'une donnée de droit activable pour l'accès à un contenu numérique protégé, le procédé comportant :
- la réception d'au moins un message de droit activable, le message de droit activable comprenant au moins une donnée de droit activable, la donnée de droit activable pouvant adopter un état « activé » et un état « à activer », une donnée de droit activable dans l'état « activé » étant utilisable pour le désembrouillage d'au moins un contenu numérique protégé et la donnée de droit activable étant reçue dans l'état « à activer »;
- le stockage de la donnée de droit activable dans l'état « à activer »; et,
- l'activation sur requête d'un utilisateur de la donnée de droit activable dans l'état « à activer » afin de la faire passer dans l'état « activé ».

L'invention permet ainsi de stocker des données de droit qui ne sont pas utilisables directement dans l'état « à activer », mais qui peuvent être activées localement. L'activation de données de droit activables peut être effectuée consécutivement à une commande d'activation saisie par l'utilisateur et envoyée au processeur de sécurité associé au terminal au moyen d'une interface homme machine du terminal par exemple. Le procédé selon l'invention permet ainsi avantageusement de transmettre des données de droit activables à un ensemble d'utilisateurs, sans que ces utilisateurs n'aient effectué de demande préalable de tels droits et donc potentiellement de façon anticipée par rapport à une utilisation possible. En effet, l'activation des données de droit activables est locale et ne nécessite donc pas d'effectuer des requêtes d'achat à des serveurs puis d'attendre la réception de nouveaux droits dans un cycle de transmission de messages de droit EMM, la durée du cycle pouvant être relativement longue. En effet, les données de droit activables sont envoyées au préalable dans l'état « à activer », puis sont activées localement par le terminal avant ou pendant un événement dont l'accès est permis par les données de droits dans l'état « activé ».

Dans une réalisation de l'invention, le procédé comprend en outre, sur réception du message de droit activable, la restitution d'au moins une donnée descriptive de la donnée de droit activable dans l'état « à activer » pour activation par l'utilisateur (ou tout au moins pour proposition d'activation par l'utilisateur).

Ainsi, lorsqu'une donnée de droit activable dans l'état « à activer » est reçue et stockée en mémoire par le processeur de sécurité, ce dernier peut transmettre au terminal au moins une donnée descriptive reçue avec le droit et pouvant correspondre, à titre d'illustration, à un titre, un prix, un résumé, un horaire ou toute autre caractéristique de la donnée de droit ou d'un contenu numérique associé à la donnée de droit activable. Ainsi, l'utilisateur peut sélectionner, au moyen d'une interface homme machine par exemple, la donnée de droit activable afin de l'activer si la donnée descriptive fournie lui convient. L'utilisateur peut donc avantageusement activer de manière locale une donnée de droit activable dans l'état « à activer » afin de la rendre utilisable pour le désembrouillage d'un contenu numérique protégé. Ce mode de réalisation permet en outre d'améliorer la présentation d'un service associé à une donnée de droit activable. On peut également prévoir qu'à la réception d'une donnée de droit dans l'état à activer par le processeur de sécurité, ce dernier puisse restituer la donnée descriptive de la donnée de droit sous la forme d'un message d'alerte sur un écran de l'utilisateur par exemple. L'utilisateur est ainsi directement informé de la possibilité d'activer une donnée de droit activable dans l'état « à activer ».

Dans un autre mode de réalisation de l'invention, le procédé comprend en outre, sur réception d'une requête de consultation des données de droits de l'utilisateur, la restitution d'au moins une donnée descriptive de la donnée de droit activable dans l'état « à activer » pour activation par l'utilisateur.

Ce mode de réalisation permet avantageusement de permettre à l'utilisateur de consulter les données de droit activables dans l'état « à activer » pouvant être stockées dans une mémoire du processeur de sécurité. Il peut ainsi accéder à tout moment aux données descriptives des données de droits activables dans l'état « à activer », afin d'éventuellement activer l'une de ces données de droit activables, ce qui améliore la flexibilité associée à l'activation d'une donnée de droit dans l'état « à activer ». La donnée descriptive peut correspondre, à titre d'illustration, à un titre, un prix, un résumé, un horaire ou toute autre caractéristique de la donnée de droit ou d'un contenu numérique associé à la donnée de droit.

Dans une réalisation de l'invention, le procédé comprend en outre :
- la réception d'un message de contrôle d'accès définissant au moins un critère d'accès à un contenu numérique protégé ;
- la vérification d'une compatibilité entre la donnée de droit activable stockée et le critère d'accès défini par le message de contrôle d'accès, la vérification de compatibilité étant conditionnelle pour accéder au contenu numérique ;
comprenant en outre, si la donnée de droit activable est compatible avec le critère d'accès et est dans l'état « à activer » :
- la restitution d'au moins une donnée descriptive de la donnée de droit activable pour activation par un utilisateur ; et
- l'affectation de l'état « activé » à la donnée de droit activable pour le désembrouillage du contenu numérique, si la donnée de droit activable a été activée par l'utilisateur.

Ainsi, sur réception d'un contenu numérique accompagné d'un message de contrôle d'accès dont les critères d'accès sont compatibles avec une donnée de droit activable dans l'état « à activer » présente dans le processeur de sécurité, l'activation de cette donnée est proposée à un utilisateur. Ainsi, si la donnée de droit activable est stockée dans une mémoire du processeur de sécurité et qu'elle est dans l'état « à activer », l'utilisateur peut activer cette donnée pour permettre le désembrouillage du contenu numérique protégé puisque la donnée de droit est alors compatible avec les critères d'accès et permet donc de déchiffrer les mots de contrôle pour le désembrouillage du contenu numérique. Ainsi, les données de droit dans l'état « activé » ont la priorité sur les données de droit dans l'état « à activer ».

Par exemple, si l'utilisateur recherche l'accès à un contenu numérique tel qu'un programme d'une chaîne et qu'il a reçu au préalable par son opérateur un droit d'accès activable dans l'état « à activer » permettant l'accès à ce programme, l'utilisateur a la possibilité d'activer ces données de droit activables afin de pouvoir accéder au programme, et ce, sans avoir eu à formuler au préalable une demande de modification de son abonnement auprès d'un opérateur par exemple. L'acquisition d'une donnée de droit utilisable pour le désembrouillage d'un contenu numérique protégé est donc considérablement améliorée dans la mesure où elle s'effectue de manière locale sur le processeur de sécurité.

Dans un mode de réalisation de l'invention, le processeur de sécurité stockant un code de sécurité et étant adapté pour vérifier la compatibilité d'un code présenté avec le code de sécurité, l'activation de la donnée de droit activable est conditionnée par la réception d'un message d'identification comprenant un code compatible avec le code de sécurité.

Ce mode de réalisation permet avantageusement de sécuriser l'activation et de maintenir la sécurité d'autorisation d'accès à des contenus par l'acquisition de droits utilisateurs. Dans l'art antérieur, les données de droits reçues dans les messages EMM ont directement l'état « activé » (en tant qu'état implicite) et sont utilisables directement pour accéder aux contenus. Leur réception est donc soumise à une autorisation préalable, typiquement une acceptation de paiement. Dans le présent mode de réalisation, l'envoi et la réception de données de droit activables se font avantageusement sans demande préalable de l'usager et ne sont donc aucunement liés à un paiement ou à une autorisation d'accès quelconque. L'activation locale est ici le déclencheur de l'utilisation effective et donc d'un éventuel paiement associé, ce qui requiert une sécurité. En effet, dans le cadre de l'invention, l'utilisateur reçoit des données de droit activable « à activer » pour lesquelles il n'a pourtant formulé aucune demande et n'a contracté aucun abonnement. Par conséquent, l'activation d'une donnée de droit « à activer » est préférentiellement conditionnée ici par la saisie correcte d'un code confidentiel et individuel, ce qui offre une sécurité suffisante.

A ce titre, un utilisateur peut par exemple fournir un code PIN qui lui a été transmis au préalable par l'opérateur ou un constructeur du processeur de sécurité lors de l'achat du processeur de sécurité par exemple. Aucune restriction n'est attachée au type de code de sécurité employé ici. L'utilisation d'un code individuel et confidentiel permet donc d'empêcher toute personne n'ayant pas accès à ce code d'activer des données de droit dans l'état « à activer ». Un parent peut ainsi empêcher l'activation de données de droit activable par ses enfants ou par toute autre personne n'ayant pas accès au code personnalisé. La saisie d'un tel code peut être effectuée au moyen d'une interface homme machine adaptée pour générer un message d'identification comprenant le code saisi.

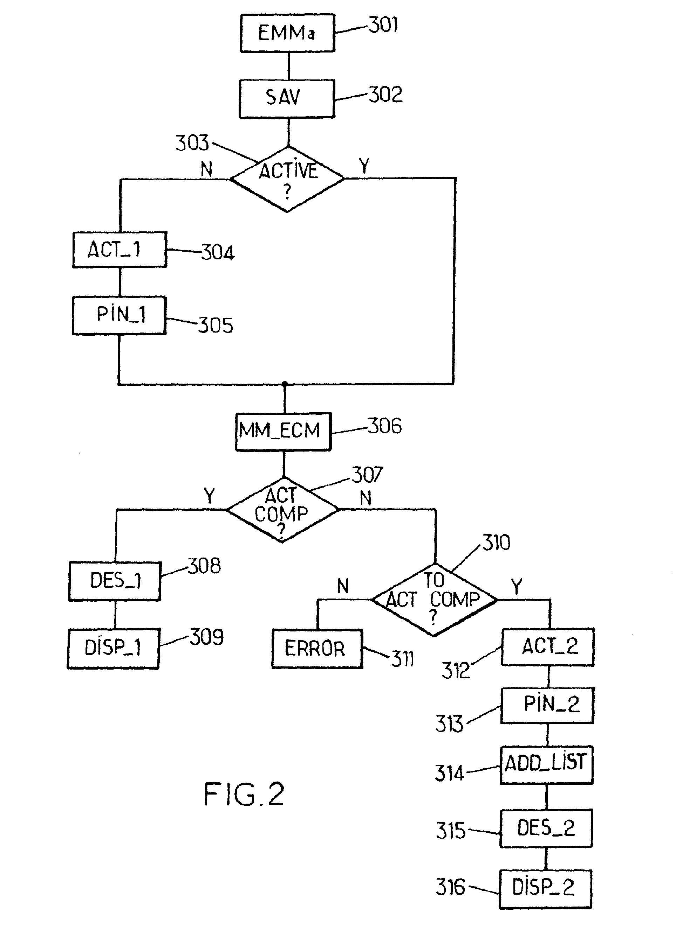

L'invention vise aussi un programme d'ordinateur comportant des instructions pour la mise en oeuvre du procédé selon l'un des modes de réalisation précédemment décrit, lorsque ce programme est exécuté par un processeur. A titre d'exemple, la figure 2 peut illustrer un organigramme général d'un algorithme de ce programme.

L'invention vise aussi un processeur de sécurité pour l'activation locale d'une donnée de droit activable pour accéder à un contenu numérique protégé comprenant:
- des moyens de réception d'au moins un message de droit activable comprenant au moins une donnée de droit activable, la donnée de droit activable pouvant adopter un état « activé » ou un état « à activer », une donnée de droit activable dans l'état « activé » étant utilisable pour le désembrouillage d'au moins un contenu numérique protégé et la donnée de droit activable étant reçue dans l'état « à activer »;
- des moyens de stockage de la donnée de droit activable ; et
- des moyens pour activer la donnée de droit activable dans l'état « à activer » afin de la faire passer à l'état « activé ».

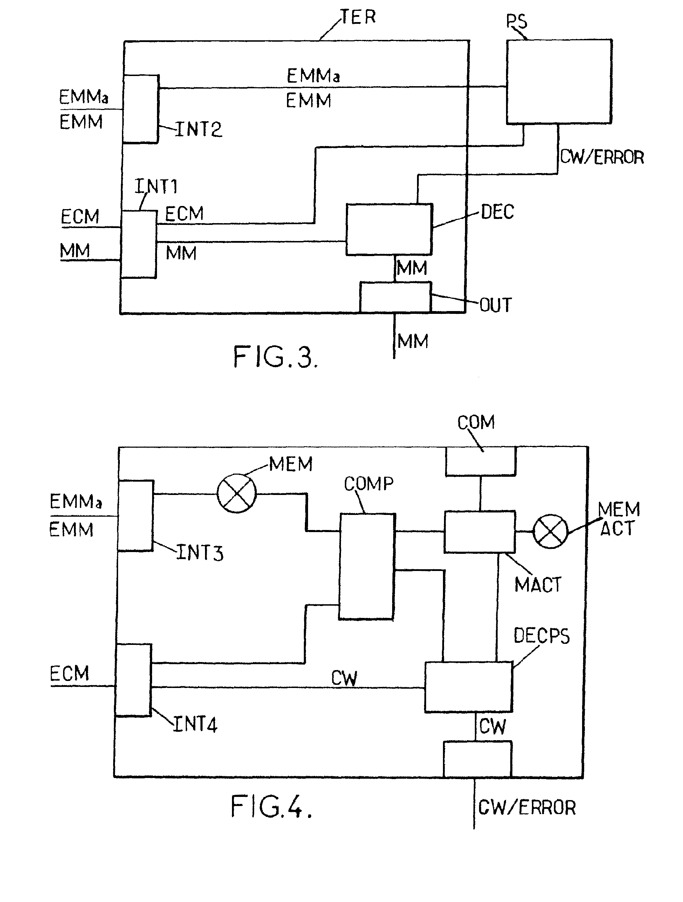

Le processeur de sécurité selon l'invention peut être illustré par la figure 4.

L'invention vise en outre un système pour l'activation d'une donnée de droit pour accéder à un contenu numérique protégé, le système comprenant un processeur de sécurité et un terminal connecté au processeur de sécurité, le terminal comprenant :
- des moyens de réception d'un contenu numérique protégé accompagné d'au moins un message de contrôle d'accès ECM comprenant un mot de contrôle CW chiffré et définissant des critères d'accès au contenu numérique ;
- des moyens de transmission des messages de contrôle d'accès au processeur de sécurité;
- des moyens de désembrouillage du contenu numérique protégé, adaptés pour désembrouiller le contenu numérique sur réception du mot de contrôle déchiffré du processeur de sécurité;
le processeur de sécurité comportant :
- des moyens de réception de messages de contrôle d'accès ;
- des moyens de vérification d'une compatibilité entre la donnée de droit activable stockée et les critères d'accès au contenu numérique ;
- des moyens de déchiffrement du mot de contrôle chiffré si la compatibilité est vérifiée et que la donnée de droit est dans l'état « activé » et des moyens de transmission du mot de contrôle aux moyens de désembrouillage du terminal ;
- des moyens de transmission au terminal de données descriptives des droits activables dans l'état « à activer » ;
le système comprenant en outre
- auprès du terminal, des moyens de réception de messages de droit activables et des moyens de transmission des messages de droit activables au processeur de sécurité ; et
- auprès du processeur de sécurité, des moyens de réception de messages de droit activables comprenant au moins une donnée de droit activable, la donnée de droit activable pouvant adopter un état « activé » ou un état « à activer », une donnée de droit activable dans l'état « activé » étant utilisable pour le désembrouillage d'au moins un contenu numérique protégé et la donnée de droit activable étant reçue dans l'état « à activer », des moyens de stockage de la donnée de droit activable et des moyens pour activer la donnée de droit activable dans l'état « à activer ».

Un système selon l'invention peut être illustré par la figure 3.

D'autres caractéristiques et avantages de l'invention apparaîtront à l'examen de la description détaillée ci-après, et des dessins annexés sur lesquels :
- la figure 1 présente un système pour l'activation locale d'une donnée de droit l'accès à un contenu numérique protégé, selon un mode de réalisation de la présente invention ;
- la figure 2 illustre un procédé d'accès à un contenu numérique protégé mis en oeuvre par le système illustré à la figure 2 ;
- la figure 3 illustre structurellement un système selon un mode de réalisation de l'invention ;
- la figure 4 illustre structurellement un processeur de sécurité selon un mode de réalisation de l'invention.

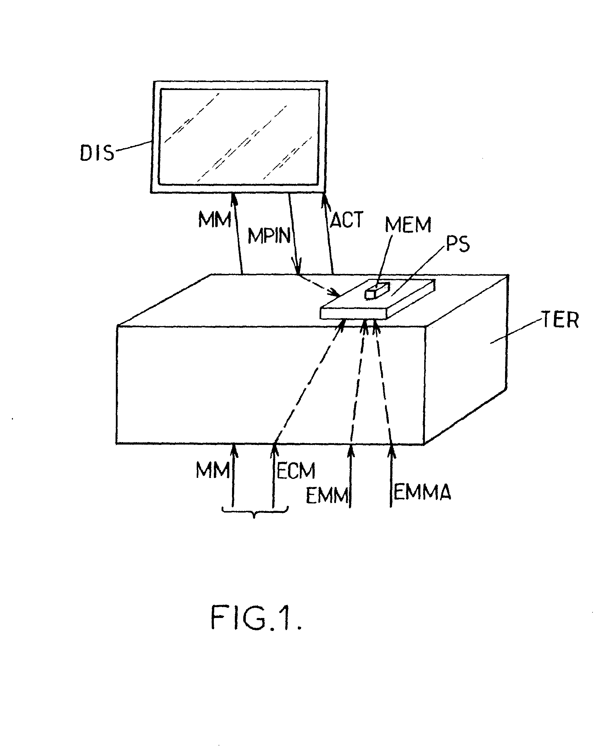

La figure 1 présente un système pour l'accès à un contenu numérique protégé. Dans l'exemple décrit ici, le système comprend un terminal TER qui peut être un récepteur décodeur TV de type STB (Set-Top-Box) ainsi qu'un processeur de sécurité PS. Le système peut être connecté à un dispositif d'affichage DIS, pour l'affichage de contenus numériques MM.

Le terminal TER peut recevoir un contenu numérique MM, tel qu'un film par exemple. Cette réception peut être consécutive à une action d'un utilisateur, telle qu'un changement de chaîne de télévision. Le terminal TER reçoit alors un contenu numérique MM protégé, sous forme d'un flux de données de contenu chiffrées, selon un mode de diffusion unidirectionnel vers le terminal TER, tel qu'un mode broadcasté ou télédiffusé. Le flux de données de contenu est transmis de façon synchrone avec un flux de messages de contrôle d'accès ECM associé. Chaque message ECM contient un ou plusieurs critères d'accès au flux de données de contenu et un mot de contrôle CW (pour « Control Word » en anglais) sous forme chiffrée. Le mot de contrôle CW permet de désembrouiller au moins une partie des données de contenu. Par extension, on dira par la suite que le mot de contrôle permet de désembrouiller le contenu numérique MM protégé.

Le processeur de sécurité PS est adapté pour stocker, au moyen d'une mémoire, des données de droit ainsi que des clés d'exploitation reçues dans des messages de droit EMM et pour vérifier une compatibilité entre ces données de droit et les critères d'accès au contenu numérique MM.

Pour le stockage de données de droit dans le processeur de sécurité PS, le terminal TER reçoit des messages de droit EMM, pouvant être transmis cycliquement par exemple et comprenant des données de droit et des clés d'exploitation. Les messages de droit EMM sont ensuite transmis par le terminal TER au processeur de sécurité PS. Les données de droit et les clés d'exploitation sont stockées ici dans une mémoire MEM du processeur de sécurité PS. Les données de droit comprises dans les messages de droit EMM peuvent correspondre à un abonnement contracté par l'utilisateur ou à une demande spécifique de ce dernier auprès d'un opérateur par exemple. Aucune limitation n'est attachée au service lié aux données de droit.

Le terminal TER reçoit aussi des messages de droit activables EMMa comprenant des données de droit activables ainsi que des clés d'exploitation qui sont stockées par la mémoire MEM du processeur de sécurité PS. A ces données de droit activables peuvent être associés au moins deux états. Un premier état « activé » signifie que les données de droit activables sont similaires aux données de droit comprises dans les messages de droit EMM. Ainsi, à la réception de messages de contrôle d'accès ECM véhiculant des critères d'accès compatibles avec les données de droit activables dans l'état « activé » (aussi appelées données de droit « activées »), le terminal TER peut recevoir les mots de contrôle CW déchiffrés par le processeur de sécurité PS, désembrouiller le contenu numérique MM protégé et transmettre le contenu MM au dispositif d'affichage DIS en vue de son affichage. Un second état « à activer » signifie que les données de droit activables (appelées en variante données de droit « à activer ») ne sont pas utilisables en tant que telles, mais que leur compatibilité avec des critères d'accès au contenu numérique MM protégé peut tout de même être vérifiée par le processeur de sécurité PS.

Les messages de contrôle d'accès ECM sont transmis par le terminal TER au processeur de sécurité PS pour traitement.

Le traitement d'un message de contrôle d'accès ECM reçu par le processeur de sécurité PS s'effectue de la façon suivante : le processeur de sécurité PS vérifie que le ou les critères d'accès au contenu numérique MM présent(s) dans l'ECM reçu sont compatibles avec les données de droit stockés en mémoire par le processeur de sécurité PS.

Si la vérification est positive, le processeur de sécurité PS déchiffre le mot de contrôle CW présent dans le message de contrôle ECM, à l'aide d'une clé d'exploitation reçue avec le message de droit EMM et stockée dans le processeur de sécurité PS, puis transmet le mot de contrôle CW au terminal TER.

Si la vérification est négative, le processeur de sécurité PS informe le terminal TER que les données de droit stockées ne sont pas compatibles avec les critères d'accès au contenu numérique MM.

Selon l'invention, le processeur de sécurité PS peut également stocker des données de droit activables dans un état « à activer », non utilisables en l'état pour un déchiffrage du mot de contrôle CW, mais activables par un utilisateur. Dans ce cas, si aucun droit activé et compatible avec les critères d'accès de l'ECM n'est présent en mémoire et si le ou les critères d'accès présents dans le message ECM reçu sont satisfaits par une donnée de droit "à activer" stockée par la mémoire MEM du processeur de sécurité PS, le processeur de sécurité PS transmet au terminal TER un message d'option d'activation ACT comprenant au moins une donnée descriptive de la donnée de droit « à activer » compatible. Le message d'option d'activation informe l'utilisateur de la présence en mémoire de la donnée de droit « à activer » afin de restituer à l'utilisateur, par l'intermédiaire du dispositif d'affichage DIS par exemple, la donnée descriptive de la donnée de droit dans l'état « à activer » compatible avec les critères d'accès au contenu numérique MM. L'utilisateur peut ainsi sélectionner, au moyen d'une interface utilisateur, une des données de droit « à activer » pour activation, s'il souhaite accéder au contenu numérique MM protégé. La sélection est validée par la saisie d'un code personnalisé par l'utilisateur, tel qu'un code PIN par exemple, transmis via un message d'identification MPIN au terminal TER qui le relaie au processeur de sécurité PS, ou transmis directement via le message MPIN au processeur de sécurité PS. Le processeur de sécurité PS vérifie alors la validité du code PIN saisi par l'utilisateur, en le comparant par exemple avec un code de sécurité qu'il stocke. En cas de vérification positive, le processeur de sécurité PS active la donnée de droit activable dans l'état « à activer » sélectionnée par l'utilisateur. La donnée de droit activable est alors dans l'état « activé » et comme elle est compatible avec les critères d'accès au contenu numérique MM, elle peut alors être utilisée pour déchiffrer le mot de contrôle CW. Le processeur de sécurité PS déchiffre ensuite le mot de contrôle CW grâce à une clé d'exploitation reçue dans le message de droit activable EMMa et stockée en mémoire, et transmet le mot de contrôle CW déchiffré au terminal TER en vue du désembrouillage du contenu numérique MM protégé. Le terminal TER peut ensuite transmettre le contenu numérique MM au dispositif d'affichage DIS pour un rendu à l'utilisateur.

La compatibilité des données de droit « activées » avec les critères d'accès au contenu numérique MM est vérifiée en priorité par rapport à celle des données de droit « à activer ». Ainsi, si l'utilisateur ne possède pas d'abonnement permettant un accès au contenu numérique protégé MM reçu et qu'il n'a pas contacté au préalable l'opérateur pour acheter des données de droit permettant de visualiser ce contenu numérique MM, aucune compatibilité entre des données de droit « activées » et les critères d'accès à l'événement sportif n'est détectée. Par conséquent, la compatibilité des données de droit « à activer » avec les critères d'accès au contenu numérique MM est vérifiée par le processeur de sécurité PS. Dans la mesure où l'utilisateur a reçu au préalable des messages de droit EMMa comprenant des données de droit « à activer » compatibles avec les critères d'accès au contenu numérique MM, le processeur de sécurité PS a stocké ces données de droit activables dans l'état « à activer ».

Dans le cadre de la visualisation, par exemple, d'un événement sportif à forte demande, un opérateur peut donc, selon l'invention, envoyer de façon anticipée des messages de droit activables EMMa à un grand nombre de processeurs de sécurité PS d'utilisateurs et permettre aux utilisateurs d'activer ultérieurement et localement les droits pour accéder à l'événement sportif s'ils le souhaitent. L'opérateur est ainsi assuré que les utilisateurs auront à leur disposition les données de droit activables, mémorisées dans les processeurs de sécurité PS, avant le début de l'événement sportif. Un utilisateur peut ainsi décider d'acquérir les droits pour l'accès à l'événement sportif au dernier moment en obtenant de façon immédiate ces droits par simple activation locale de données de droit activables dans l'état « à activer ».

L'envoi de messages de droit activables EMMa permet également à l'opérateur diffusant ces messages de faire de la publicité pour un contenu numérique dont les critères d'accès sont compatibles avec les données de droit activables comprises dans les messages de droit activables EMMa. L'opérateur peut par ailleurs accompagner la diffusion de messages de droit activables EMMa d'un résumé du contenu numérique correspondant, d'une affiche de film, d'une bande annonce ou d'informations sur les horaires correspondants. Ces données peuvent êtres incluses dans des flux de transfert des messages de droit activables EMMa par exemple ou être récupérables par le terminal dans le guide des programmes par utilisation d'un identifiant transmis avec le droit.

Par ailleurs, l'achat de données de droit est simplifié pour l'utilisateur car il est effectué de manière locale, ce qui ne nécessite pas pour l'opérateur un arrêt de la mise en vente d'un contenu numérique MM bien avant sa diffusion.

Dans un mode de réalisation, l'utilisateur peut consulter de sa propre initiative une liste des données de droit activables dans l'état « à activer » qui sont stockées par le processeur de sécurité PS. A cet effet, le processeur de sécurité PS peut fournir une liste de données descriptives des données de droit « à activer » dans un message d'option d'activation ACT pour une restitution de ces données descriptives à l'utilisateur. L'utilisateur peut ainsi activer sur consultation des données de droit « à activer ». Cette activation s'effectue de manière locale par le processeur de sécurité PS.

Dans une réalisation complémentaire, à chaque réception d'une donnée de droit activable dans l'état « à activer », le processeur de sécurité PS peut restituer, dans un message d'option d'activation ACT, une liste de données descriptives des données de droit « à activer » à l'utilisateur. L'utilisateur peut ainsi être alerté par un message d'alerte généré consécutivement à la réception d'une donnée de droit activable dans l'état « à activer » par le processeur de sécurité PS. En recevant une donnée de droit activable dans l'état « à activer » compatible avec les critères d'accès à un contenu numérique MM diffusé ultérieurement, l'utilisateur peut activer de manière locale, quand bon lui semble, la donnée de droit activable ce qui évite de formuler une demande préalable de cet utilisateur auprès de son opérateur afin de modifier son abonnement par exemple. Ce mode de réalisation permet également à l'opérateur de faire de la publicité pour un événement diffusé ultérieurement en proposant un achat local de données de droit permettant l'accès à cet événement.

L'opérateur peut ensuite recenser les processeurs de sécurité PS ayant fait l'objet d'activations locales de données de droit activables pour des accès à des contenus numériques MM. Ce recensement peut permettre à l'opérateur de facturer ces accès aux utilisateurs par exemple. Le fait de requérir des données personnelles et confidentielles, telles que le code PIN, lors de l'activation d'une donnée de droit permet de s'assurer que la facturation correspond bien aux achats de droits par l'utilisateur. Ce recensement peut s'effectuer de différentes manières comme par exemple lors de l'initialisation du processeur de sécurité PS d'un utilisateur. L'opérateur peut aussi envoyer des requêtes de consultation directe des processeurs de sécurité PS de ses utilisateurs. Aucune contrainte de temps n'étant appliquée au recensement, l'opérateur peut choisir un mode de recensement selon sa convenance qui, par ailleurs, peut être effectué de manière invisible pour l'utilisateur.

La figure 2 illustre un procédé d'accès à un contenu numérique MM protégé mis en oeuvre par le système illustré à la figure 1.

Lors d'une étape 301, le terminal TER reçoit des messages de droit activables EMMa, comprenant une ou plusieurs données de droit activables et des clés d'exploitation, et les transmet au processeur de sécurité PS afin qu'il traite ces messages de droit EMMa pour en extraire la ou les données de droit activables ainsi que les clés d'exploitation. Les données de droit et les clés d'exploitation ainsi reçues sont stockées lors d'une étape 302 dans une mémoire du processeur de sécurité PS. Le processeur de sécurité PS vérifie lors d'une étape 303 l'état des données de droit stockées. Si le processeur de sécurité PS stocke des données de droit dont l'état est « à activer », il peut générer un message d'option d'activation ACT, lors d'une étape 304, comprenant au moins une donnée descriptive de la donnée de droit dans l'état « à activer » pour une restitution à l'utilisateur. L'utilisateur est donc informé de la réception d'une donnée de droit dans l'état « à activer ». Il peut donc consulter la donnée descriptive et choisir d'activer ou non cette donnée de droit activable dans l'état « à activer ». Pour confirmer l'activation, l'utilisateur saisit un code personnel et confidentiel, tel qu'un code PIN, au moyen d'une interface homme machine par exemple, afin de transmettre au processeur de sécurité PS un message MPIN comprenant le code PIN, lors d'une étape 305. Le processeur de sécurité PS vérifie alors la validité du code PIN transmis par l'utilisateur, par exemple en le comparant à un code de sécurité préenregistré dans le processeur de sécurité PS. Si le code PIN est valide, la donnée de droit activable dans l'état « à activer » choisie par l'utilisateur est passée par le processeur de sécurité PS dans l'état « activé ».

Ces étapes permettent à l'utilisateur d'acquérir des données de droit de manière locale en anticipant une future réception d'un contenu numérique MM auquel son abonnement actuel ne permet pas d'accéder.

L'utilisateur peut également consulter de manière volontaire l'ensemble des données de droit activables dans l'état « à activer » stockées par le processeur de sécurité PS, afin d'éventuellement activer l'une ou plusieurs de ces données de droit activables, toujours en transmettant le code PIN après sélection d'une ou plusieurs données de droit dont les données descriptives lui ont été restituées sur consultation.

Lorsque l'utilisateur souhaite accéder à une chaîne de télévision qui nécessite par exemple un abonnement spécifique à un service, un contenu numérique MM est reçu par le terminal TER lors d'une étape 306 sous forme protégée, accompagné de messages de contrôle d'accès ECM comprenant un mot de contrôle CW chiffré, et définissant des critères d'accès au contenu MM. Le terminal TER transmet les messages de contrôle d'accès ECM au processeur de sécurité PS qui vérifie une compatibilité, lors d'une étape 307, entre des données de droit activables dans l'état « activé » qu'il stocke et les critères d'accès des messages de contrôle d'accès ECM. Si la compatibilité est vérifiée pour au moins une donnée de droit activable dans l'état « activé », le processeur de sécurité PS déchiffre au moyen d'une clé d'exploitation stockée en mémoire le mot de contrôle CW et le transmet au terminal TER afin qu'il désembrouille le contenu numérique MM protégé lors d'une étape 308. Le contenu numérique MM est transmis lors d'une étape 309 à un dispositif d'affichage DIS pour un rendu du contenu numérique MM à l'utilisateur.

En revanche, si aucune donnée de droit dans l'état « activé », qu'il s'agisse d'une donnée de droit reçue dans l'état « activé » ou reçue dans l'état « à activer » et activée ultérieurement localement, n'est compatible avec les critères d'accès au contenu numérique MM, le processeur de sécurité PS vérifie, lors d'une étape 310, la compatibilité entre les critères d'accès et la ou les données de droit activables dans l'état « à activer » qu'il stocke éventuellement. Si aucune donnée de droit activable dans l'état « à activer » n'est compatible avec les critères d'accès au contenu numérique MM alors le processeur de sécurité PS génère, lors d'une étape 311, un message d'erreur qui est restitué à l'utilisateur.

Si au moins une donnée de droit activable dans l'état « à activer » est compatible avec les critères d'accès au contenu numérique MM, le processeur de sécurité PS fournit au moins une donnée descriptive de la donnée de droit activable dans l'état « à activer » dans un message d'option activation ACT pour une restitution à l'utilisateur lors d'une étape 312. L'utilisateur peut choisir d'activer l'une ou plusieurs de ces données de droit activables. Chaque donnée de droit activable peut correspondre à un service donné, tel qu'un accès ponctuel au contenu numérique MM ou un abonnement mensuel à la chaîne diffusant le contenu numérique MM. Aucune restriction n'est attachée au type de service proposé. Lorsque l'utilisateur a choisi une donnée de droit activable pour l'activation, il saisit pour validation un code PIN, au moyen d'une interface utilisateur par exemple, qui est transmis au processeur de sécurité PS via un message d'activation MPIN comprenant le code PIN lors d'une étape 313. Le processeur de sécurité PS vérifie que le code PIN est correct, en le comparant par exemple avec un code de sécurité stocké dans le processeur de sécurité PS. Si tel est le cas, le processeur de sécurité PS passe la donnée de droit activable sélectionnée par l'utilisateur dans l'état « activé ».

Le processeur de sécurité PS peut donc déchiffrer le mot de contrôle CW pour le transmettre au terminal TER. Le contenu numérique MM protégé peut ainsi être désembrouillé, lors d'une étape 315, par le terminal TER au moyen des mots de contrôle CW reçus afin d'être transmis lors d'une étape 316 au dispositif d'affichage DIS en vue d'une visualisation du contenu numérique MM désembrouillé par l'utilisateur.

La figure 3 illustre une structure d'un terminal TER relié à un processeur de sécurité PS selon l'invention.

Le terminal TER comprend une interface INT1 de réception de contenus numériques MM protégés et de messages de contrôle d'accès ECM comprenant un mot de contrôle chiffré permettant l'accès au contenu numérique MM. Les messages de contrôle d'accès ECM définissent également des critères d'accès au contenu numérique MM. L'interface INT1 est en outre adaptée pour transmettre les messages de contrôle d'accès ECM au processeur de sécurité PS et pour transmettre le contenu numérique MM protégé à un désembrouilleur DEC compris dans le terminal TER.

Le terminal TER comprend en outre une interface INT2 de réception de messages de droit EMM comprenant des données de droit et des clés d'exploitation, ainsi que des messages de droit activable EMMa comprenant des données de droit activables, pouvant adopter un état « activé » et un état « à activer », et des clés d'exploitation. L'interface INT2 est également adaptée pour transmettre les messages de droit EMM et les messages de droit activables EMMa au processeur de sécurité PS.

Le désembrouilleur DEC est adapté pour recevoir des contenus numériques MM protégés de l'interface INT1 et le mot de contrôle CW déchiffré par le processeur de sécurité PS. Le désembrouilleur DEC désembrouille ainsi le contenu numérique MM et le transmet à une interface de sortie OUT du terminal TER. L'interface de sortie OUT est adaptée pour transmettre le contenu numérique MM à un dispositif d'affichage, tel qu'un écran par exemple, pour un rendu à l'utilisateur. L'interface OUT est également adaptée pour générer un message d'erreur lorsqu'un contenu numérique MM protégé n'a pu être désembrouillé.

La figure 4 illustre un processeur de sécurité PS selon un mode de réalisation de l'invention adapté pour être connecté au terminal TER représenté sur la figure 3.

Le processeur de sécurité PS comprend à cet effet une interface INT3 de traitement des messages de droit EMM et des messages de droit activables EMMa reçus du terminal TER. L'interface INT3 extrait les données de droit ainsi que les clés d'exploitation contenues dans les messages de droit EMM et les données de droit activables et les clés d'exploitation contenues dans les messages de droit activables EMMa et transmet ces données et ces clés d'exploitation à une mémoire MEM du processeur de sécurité PS. La mémoire MEM est adaptée pour le stockage des données de droit et des données de droit activables. La mémoire MEM est adaptée pour communiquer avec un comparateur COMP du processeur de sécurité PS.

Le processeur de sécurité PS comprend en outre une interface INT4 de traitement des messages de contrôle d'accès ECM reçus du terminal TER. L'interface INT4 est adaptée pour transmettre le mot de contrôle CW chiffré à un module de déchiffrement DECPS du processeur de sécurité PS et les critères d'accès définis dans les EMM au comparateur COMP.

Le comparateur COMP est adapté pour comparer les critères d'accès définis dans les EMM avec les données de droit et les données de droit activables stockées dans la mémoire MEM.

Si une donnée de droit ou une donnée de droit activable dans l'état « activée » compatible avec les critères d'accès est stockée dans la mémoire MEM, le comparateur COMP peut transmettre une clé d'exploitation stockée dans la mémoire MEM au module de déchiffrement DECPS pour le déchiffrement du mot de contrôle CW.

Dans le cas contraire, le comparateur COMP vérifie qu'une donnée de droit activable dans l'état « à activer » est compatible avec les critères d'accès définis dans les messages EMM. Si tel est le cas, la ou les données de droits « à activer » compatibles sont transmises à un module d'activation MACT du processeur de sécurité PS. Le module d'activation MACT est adapté pour transmettre des données spécifiques relatives aux données de droits « à activer » compatibles à une interface COM de communication. L'interface COM est adaptée pour restituer à un utilisateur les données spécifiques aux données de droit « à activer » et pour recevoir un ordre d'activation de l'une de ces données de droit « à activer » ainsi qu'un code PIN de l'utilisateur. A cet effet, l'interface COM peut être reliée à une interface homme machine par laquelle l'utilisateur peut sélectionner une donnée de droit « à activer » pour activation et saisir le code PIN. L'interface COM est également adaptée pour vérifier la validité du code PIN et pour transmettre, si le code PIN est valide, l'ordre d'activation au module d'activation ACT. Le module d'activation MACT active dans ce cas la donnée de droit « à activer » sélectionnée par l'utilisateur et fournit une clé d'exploitation stockée dans la mémoire MEM au module de déchiffrement DECPS pour le déchiffrement du mot de contrôle CW.

A la réception de la clé d'exploitation, le module de déchiffrement DECPS déchiffre le mot de contrôle CW et le transmet à une interface de sortie OUTPS du processeur de sécurité PS adaptée pour transmettre le mot de contrôle CW au terminal TER pour le désembrouillage du contenu numérique MM.

Si aucune clé d'exploitation n'est reçue par le module de déchiffrement DECPS, il génère un message d'erreur transmis à l'interface de sortie OUTPS qui transmet ce message d'erreur au terminal TER.

Bien entendu, la présente invention ne se limite pas à la forme de réalisation décrite ci-avant à titre d'exemple ; elle s'étend à d'autres variantes.

On a décrit ci-avant, comme application possible, l'accès à des contenus protégés, de type vidéo, pour un désembrouillage de contenus initialement embrouillés. Toutefois, l'invention s'applique à tout type de contenu protégé (audio ou autres).

Plus généralement, elle s'applique à tout service multimédia protégé dont l'accès met en oeuvre un terminal comportant des moyens pour stocker des données de droit.

## Revendications

1. Procédé d'activation locale d'une donnée de droit activable pour l'accès à un contenu numérique protégé, mis en oeuvre par un processeur de sécurité (PS), **caractérisé en ce qu'**il comporte :
- la réception d'au moins un message de droit activable (EMMa), ledit message de droit activable comprenant au moins une donnée de droit activable et une clé d'exploitation associée, ledit message de droit activable étant reçu en mode unidirectionnel de diffusion et ladite donnée de droit activable pouvant adopter un état « activé » et un état « à activer », une clé d'exploitation associée à une donnée de droit activable dans l'état « activé » étant utilisable par le processeur de sécurité pour le désembrouillage d'au moins un contenu numérique protégé, une clé d'exploitation associée à une donnée de droit activable dans l'état « à activer » n'étant pas utilisable pour le désembrouillage du contenu numérique protégé et ladite donnée de droit activable étant reçue dans l'état « à activer »;
- le stockage de la donnée de droit activable dans l'état « à activer »;
- la réception d'un message de contrôle d'accès comprenant au moins un critère d'accès au contenu numérique protégé ;
- la vérification d'une compatibilité entre le critère d'accès reçu et la donnée de droit activable dans l'état « à activer » et,
- l'activation sur requête d'un utilisateur de la donnée de droit activable compatible afin de la faire passer dans l'état « activé ».

2. Procédé selon la revendication 1, **caractérisé en ce qu'**il comprend en outre, sur réception du message de droit activable (EMMa), la restitution d'au moins une donnée descriptive de la donnée de droit activable dans l'état « à activer » pour proposition d'activation par l'utilisateur.

3. Procédé selon l'une des revendications 1 ou 2, **caractérisé en ce qu'**il comprend en outre, sur réception d'une requête de consultation de données de droit de l'utilisateur, la restitution d'au moins une donnée descriptive de la donnée de droit activable dans l'état « à activer » pour activation par l'utilisateur.

4. Procédé selon l'une des revendications 1 à 3, comprenant en outre :
- la réception d'un message de contrôle d'accès (ECM) définissant au moins un critère d'accès à un contenu numérique protégé ;
- la vérification d'une compatibilité entre la donnée de droit activable stockée et le critère d'accès défini par le message de contrôle d'accès, ladite vérification de compatibilité étant conditionnelle pour accéder au contenu numérique ;
comprenant en outre, si la donnée de droit activable est compatible avec le critère d'accès et est dans l'état « à activer » :
- la restitution d'au moins une donnée descriptive de la donnée de droit activable pour activation par un utilisateur ; et
- l'affectation de l'état « activé » à la donnée de droit activable pour le désembrouillage du contenu numérique, si la donnée de droit activable a été activée par l'utilisateur.

5. Procédé selon l'une des revendications 1 à 4, ledit processeur de sécurité (PS) stockant un code de sécurité et étant adapté pour vérifier la compatibilité d'un code avec ledit code de sécurité, dans lequel l'activation de la donnée de droit activable est conditionnée par la réception d'un message d'identification (MPIN) comprenant un code compatible avec ledit code de sécurité.

6. Programme d'ordinateur comportant des instructions pour la mise en oeuvre du procédé selon l'une des revendications 1 à 5, lorsque ce programme est exécuté par un processeur.

7. Processeur de sécurité pour l'activation locale d'une donnée de droit activable pour accéder à un contenu numérique (MM) protégé **caractérisé en ce qu'**il comprend :
- des moyens de réception (INT3) d'au moins un message de droit activable comprenant au moins une donnée de droit activable et une clé d'exploitation associée, ledit message de droit activable étant reçu en mode unidirectionnel de diffusion et ladite donnée de droit activable pouvant adopter un état « activé » ou un état « à activer », une clé d'exploitation associée à une donnée de droit activable dans l'état « activé » étant utilisable pour le désembrouillage d'au moins un contenu numérique protégé, une clé d'exploitation associée à une donnée de droit activable dans l'état « à activer » n'étant pas utilisable pour le désembrouillage du contenu numérique protégé et ladite donnée de droit activable étant reçue dans l'état « à activer »;
- des moyens de stockage (MEM) de la donnée de droit activable ;
- des moyens de réception (INT4) d'un message de contrôle d'accès comprenant au moins un critère d'accès au contenu numérique protégé ;
- des moyens de vérification (COMP) d'une compatibilité entre le critère d'accès reçu et la donnée de droit activable dans l'état « à activer »
- des moyens de réception (COM) d'une requête d'un utilisateur ; et
- des moyens (MACT) pour activer la donnée de droit activable dans l'état compatible afin de la faire passer à l'état "activé", sur réception de ladite requête de l'utilisateur.

8. Système pour l'activation d'une donnée de droit pour accéder à un contenu numérique (MM) protégé, **caractérisé en ce que** ledit système comprenant un processeur de sécurité (PS) selon la revendication 7 et un terminal (TER) connecté audit processeur de sécurité, ledit terminal comprenant :
- des moyens de réception (INT1) d'un contenu numérique protégé accompagné d'au moins un message de contrôle d'accès comprenant un mot de contrôle (CW) chiffré et définissant des critères d'accès au contenu numérique ;
- des moyens de transmission (INT1) desdits messages de contrôle d'accès au processeur de sécurité;
- des moyens de désembrouillage (DEC) du contenu numérique protégé, adaptés pour désembrouiller le contenu numérique sur réception du mot de contrôle déchiffré du processeur de sécurité;
- des moyens de réception (INT2) de messages de droit activables et des moyens de transmission (INT2) desdits messages de droit activables au processeur de sécurité ;
ledit processeur de sécurité comportant en outre :
- des moyens de déchiffrement (DECPS) du mot de contrôle chiffré si ladite compatibilité est vérifiée et que la donnée de droit est dans l'état « activé » et des moyens de transmission du mot de contrôle auxdits moyens de désembrouillage du terminal ;
- des moyens de transmission au terminal de données descriptives des droits activables dans l'état « à activer ».

## Patentansprüche

1. Verfahren zur lokalen Aktivierung eines aktivierbaren Berechtigungsdatenwerts für den Zugriff auf einen geschützten digitalen Inhalt, durchgeführt von einem Sicherheitsprozessor (PS), **dadurch gekennzeichnet, dass** es aufweist:
- den Empfang mindestens einer aktivierbaren Berechtigungsmitteilung (EMMa), wobei die aktivierbare Berechtigungsmitteilung mindestens einen aktivierbaren Berechtigungsdatenwert und einen zugeordneten Betriebsschlüssel enthält, wobei die aktivierbare Berechtigungsmitteilung im unidirektionalen Verbreitungsmodus empfangen wird und der aktivierbare Berechtigungsdatenwert einen Zustand « aktiviert » und einen Zustand « zu aktivieren » annehmen kann, wobei ein einem aktivierbaren Berechtigungsdatenwert im Zustand « aktiviert » zugeordneter Betriebsschlüssel vom Sicherheitsprozessor zum Descrambeln mindestens eines geschützten digitalen Inhalts verwendet werden kann, wobei ein einem aktivierbaren Berechtigungsdatenwert im Zustand « zu aktivieren » zugeordneter Betriebsschlüssel nicht zum Descrambeln des geschützten digitalen Inhalts verwendet werden kann, u n d d e r aktivierbare Berechtigungsdatenwert im Zustand « zu aktivieren » empfangen wird;
- das Speichern des aktivierbaren Berechtigungsdatenwerts im Zustand « zu aktivieren »;
- den Empfang einer Zugriffskontrollmitteilung, die mindestens ein Zugriffskriterium zum geschützten digitalen Inhalt enthält;
- die Verifizierung einer Kompatibilität zwischen dem empfangenen Zugriffskriterium und dem aktivierbaren Berechtigungsdatenwert im Zustand « zu aktivieren » und
- die Aktivierung, auf Anforderung eines Benutzers, des kompatiblen aktivierbaren Berechtigungsdatenwerts, um ihn in den Zustand « aktiviert » übergehen zu lassen.

2. Verfahren nach Anspruch 1, **dadurch gekennzeichnet, dass** es außerdem bei Empfang der aktivierbaren Berechtigungsmitteilung (EMMa) die Wiedergabe mindestens eines beschreibenden Datenwerts des aktivierbaren Berechtigungsdatenwerts im Zustand « zu aktivieren » für den Aktivierungsvorschlag durch den Benutzer enthält.

3. Verfahren nach einem der Ansprüche 1 oder 2, **dadurch gekennzeichnet, dass** es außerdem bei Empfang einer Abfrageanforderung von Berechtigungsdaten des Benutzers die Wiedergabe mindestens eines beschreibenden Datenwerts des aktivierbaren Berechtigungsdatenwerts im Zustand « zu aktivieren » zur Aktivierung durch den Benutzer enthält.

4. Verfahren nach einem der Ansprüche 1 bis 3, das weiter enthält:
- den Empfang einer Zugriffskontrollmitteilung (ECM), die mindestens ein Zugriffskriterium auf einen geschützten digitalen Inhalt definiert;
- die Verifizierung einer Kompatibilität zwischen dem gespeicherten aktivierbaren Berechtigungsdatenwert und dem von der 2ugriffskontrollmitteilung definierten Zugriffskriterium, wobei die Kompatibilitätsverifizierung eine Bedingung für den Zugriff zum digitalen Inhalt ist;
das weiter, wenn der aktivierbare Berechtigungsdatenwert mit dem Zugriffskriterium kompatibel und im Zustand « zu aktivieren » ist, enthält:
- die Wiedergabe mindestens eines beschreibenden Datenwerts d e s aktivierbaren Berechtigungsdatenwerts zur Aktivierung durch einen Benutzer; und
- die Zuweisung des Zustands « aktiviert » zum aktivierbaren Berechtigungsdatenwert zum Descrambeln des digitalen Inhalts, wenn der aktivierbare Berechtigungsdatenwert vom Benutzer aktiviert wurde.

5. Verfahren nach einem der Ansprüche 1 bis 4, wobei der Sicherheitsprozessor (PS) einen Sicherheitscode speichert und geeignet ist, die Kompatibilität eines Codes mit dem Sicherheitscode zu verifizieren, wobei die Aktivierung des aktivierbaren Berechtigungsdatenwerts durch den Empfang einer Identifikationsmitteilung (MPIN) bedingt wird, die einen mit dem Sicherheitscode kompatiblen Code enthält.

6. Computerprogramm, das Anweisungen zur Durchführung des Verfahrens nach einem der Ansprüche 1 bis 5 aufweist, wenn dieses Programm von einem Prozessor ausgeführt wird.

7. Sicherheitsprozessor zur lokalen Aktivierung eines aktivierbaren Berechtigungsdatenwerts, um auf einen geschützten digitalen Inhalt (MM) zuzugreifen, **dadurch gekennzeichnet, dass** er enthält:
- Einrichtungen (INT3) zum Empfang mindestens einer aktivierbaren Berechtigungsmitteilung, die mindestens einen aktivierbaren Berechtigungsdatenwert und einen zugeordneten Betriebsschlüssel enthält, wobei die aktivierbare Berechtigungsmitteilung im unidirektionalen Verbreitungsmodus empfangen wird und der aktivierbare Berechtigungsdatenwert einen Zustand « aktiviert » oder einen Zustand « zu aktivieren » annehmen kann, wobei ein einem aktivierbaren Berechtigungsdatenwert im Zustand « aktiviert » zugeordneter Betriebsschlüssel zum Descrambeln mindestens eines geschützten digitalen Inhalts verwendet werden kann, ein einem aktivierbaren Berechtigungsdatenwert im Zustand « zu aktivieren » zugeordneter Betriebsschlüssel nicht zum Descrambeln des geschützten digitalen Inhalts verwendet werden kann, und der aktivierbare Berechtigungsdatenwert im Zustand « zu aktivieren » empfangen wird;
- Einrichtungen (MEM) zum Speichern des aktivierbaren Berechtigungsdatenwerts;
- Einrichtungen (INT4) zum Empfang einer Zugriffskontrollmitteilung, die mindestens ein Zugriffskriterium zum geschützten digitalen Inhalt enthält;
- Einrichtungen (COMP) zur Verifizierung einer Kompatibilität zwischen dem empfangenen Zugriffskriterium und dem aktivierbaren Berechtigungsdatenwert im Zustand « zu aktivieren »;
- Einrichtungen (COM) zum Empfang einer Anforderung eines Benutzers; und
- Einrichtungen (MACT), um den aktivierbaren Berechtigungsdatenwert im kompatiblen Zustand zu aktivieren, um ihn bei Empfang der Anforderung vom Benutzer in den Zustand « aktiviert » übergehen zu lassen.

8. System zur Aktivierung eines Berechtigungsdatenwerts, um auf einen geschützten digitalen Inhalt (MM) zuzugreifen, **dadurch gekennzeichnet, dass** das System einen Sicherheitsprozessor (PS) nach Anspruch 7 und ein mit dem Sicherheitsprozessor verbundenes Endgerät (TER) enthält, wobei das Endgerät enthält:
- Einrichtungen (INT1) zum Empfang eines geschützten digitalen Inhalts begleitet von mindestens einer Zugriffskontrollmitteilung, die ein verschlüsseltes Kontrollwort (CW) enthält und Zugriffskriterien zum digitalen Inhalt definiert;
- Einrichtungen (INT1) zur Übertragung der Zugriffskontrollmitteilungen zum Sicherheitsprozessor;
- Einrichtungen (DEC) zum Descrambeln des geschützten digitalen Inhalts, die geeignet sind, um den digitalen Inhalt bei Empfang des entschlüsselten Kontrollworts vom Sicherheitsprozessor zu descrambeln;
- Einrichtungen (INT2) zum Empfang von aktivierbaren Berechtigungsmitteilungen und Einrichtungen (INT2) zur Übertragung der aktivierbaren Berechtigungsmitteilungen zum Sicherheitsprozessor;
wobei der Sicherheitsprozessor außerdem aufweist:
- Einrichtungen (DECPS) zum Entschlüsseln des verschlüsselten Kontrollworts, falls die Kompatibilität verifiziert wird und der Berechtigungsdatenwert im Zustand « aktiviert » ist, und Einrichtungen zur Übertragung des Kontrollworts an die Descrambling-Einrichtungen des Endgeräts;
- Einrichtungen zur Übertragung an das Endgerät von beschreibenden Daten der aktivierbaren Berechtigungen im Zustand « zu aktivieren ».

## Claims

1. Method of local activation of an activatable entitlement datum for access to a protected digital content, implemented by a security processor (PS), **characterized in that** it comprises:
- the receipt of at least one activatable entitlement message (EMMa), said activatable entitlement message comprising at least one activatable entitlement datum and an associated operating key, said activatable entitlement message being received in unidirectional broadcasting mode and said activatable entitlement datum being able to adopt an "activated" state and a "to be activated" state, an operating key associated with an activatable entitlement datum in the "activated" state being usable by the security processor for the descrambling of at least one protected digital content, an operating key associated with an activatable entitlement datum in the "to be activated" state not being usable for the descrambling of the protected digital content and said activatable entitlement datum being received in the "to be activated" state;
- the storage of the activatable entitlement datum in the "to be activated" state;
- the receipt of an access control message comprising at least one criterion for access to the protected digital content;
- the verification of a compatibility between the access criterion received and the activatable entitlement datum in the "to be activated" state; and
- the activation on request of a user of the compatible activatable entitlement datum so as to cause it to toggle to the "activated" state.

2. Method according to Claim 1, **characterized in that** it furthermore comprises, on receipt of the activatable entitlement message (EMMa), the restitution of at least one datum descriptive of the activatable entitlement datum in the "to be activated" state for proposal of activation by the user.

3. Method according to one of Claims 1 or 2, **characterized in that** it furthermore comprises, on receipt of a request for consultation of entitlement data of the user, the restitution of at least one datum descriptive of the activatable entitlement datum in the "to be activated" state for activation by the user.

4. Method according to one of Claims 1 to 3, furthermore comprising:
- the receipt of an access control message (ECM) defining at least one criterion for access to a protected digital content;
- the verification of a compatibility between the stored activatable entitlement datum and the access criterion defined by the access control message, said verification of compatibility being conditional to access the digital content;
furthermore comprising, if the activatable entitlement datum is compatible with the access criterion and is in the "to be activated" state:
- the restitution of at least one datum descriptive of the activatable entitlement datum for activation by a user; and
- the assignment of the "activated" state to the activatable entitlement datum for the descrambling of the digital content, if the activatable entitlement datum has been activated by the user.

5. Method according to one of Claims 1 to 4, said security processor (PS) storing a security code and being adapted for verifying the compatibility of a code with said security code, in which the activation of the activatable entitlement datum is conditioned by the receipt of an identification message (MPIN) comprising a code compatible with said security code.

6. Computer program comprising instructions for the implementation of the method according to one of Claims 1 to 5, when this program is executed by a processor.

7. Security processor for the local activation of an activatable entitlement datum to access a protected digital content (MM) **characterized in that** it comprises:
- means of reception (INT3) of at least one activatable entitlement message comprising at least one activatable entitlement datum and an associated operating key, said activatable entitlement message being received in unidirectional broadcasting mode and said activatable entitlement datum being able to adopt an "activated" state or a "to be activated" state, an operating key associated with an activatable entitlement datum in the "activated" state being usable for the descrambling of at least one protected digital content, an operating key associated with an activatable entitlement datum in the "to be activated" state not being usable for the descrambling of the protected digital content and said activatable entitlement datum being received in the "to be activated" state;
- means of storage (MEM) of the activatable entitlement datum;
- means of reception (INT4) of an access control message comprising at least one criterion for access to the protected digital content;
- means of verification (COMP) of a compatibility between the access criterion received and the activatable entitlement datum in the "to be activated" state;
- means of reception (COM) of a request of a user; and
- means (MACT) for activating the activatable entitlement datum in the compatible state so as to cause it to toggle to the "activated" state, on receipt of said request of the user.

8. System for the activation of an entitlement datum to access a protected digital content (MM), **characterized in that** said system comprises a security processor (PS) according to Claim 7 and a terminal (TER) connected to said security processor, said terminal comprising:
- means of reception (INT1) of a protected digital content accompanied by at least one access control message comprising an enciphered control word (CW) and defining criteria for access to the digital content;
- means of transmission (INT1) of said access control messages to the security processor;
- means of descrambling (DEC) of the protected digital content, adapted for descrambling the digital content on receipt of the deciphered control word of the security processor;
- means of reception (INT2) of activatable entitlement messages and means of transmission (INT2) of said activatable entitlement messages to the security processor;
said security processor furthermore comprising:
- means of decipherment (DECPS) of the enciphered control word if said compatibility is verified and if the entitlement datum is in the "activated" state and means of transmission of the control word to said means of descrambling of the terminal;
- means of transmission to the terminal of data descriptive of the activatable entitlements in the "to be activated" state.
